# EUROPÄISCHE PATENTSCHRIFT

(11) **EP 3 605 763 B1**
(45) Veröffentlichungstag und Bekanntmachung des Hinweises auf die Patenterteilung: **27.01.2021**
(21) Anmeldenummer: 19000306.1
(22) Anmeldetag: 26.06.2019
(51) Int. Cl.: H02G 9/10

(54) **UNTERFLUR-SCHACHT INSBESONDERE FÜR DIE ENERGIEVERTEILUNG UND/ODER DIE TELEKOMMUNIKATION**
UNDERFLOOR SHAFT, IN PARTICULAR FOR ENERGY DISTRIBUTION AND/OR TELECOMMUNICATION
CAGE SOUTERRAINE, EN PARTICULIER POUR LA DISTRIBUTION D'ÉNERGIE ET/OU LA TÉLÉCOMMUNICATION

(30) Priorität: 30.07.2018 DE 102018005962
(43) Veröffentlichungstag der Anmeldung: 05.02.2020
(73) Patentinhaber: Langmatz GmbH, 82467 Garmisch-Partenkirchen (DE)
(72) Erfinder: Jais, Stefan, 82481 Mittenwald (DE)
(74) Vertreter: Flosdorff, Jürgen

(56) Entgegenhaltungen:
- EP-A2- 2 186 946
- DE-A1-102006 045 873
- DE-B3-102010 050 964
- DE-U1- 9 208 786
- JP-A- 2004 346 512
- Langmatz: "Lösungen für Glasfasernetze -FTTH", , 31. Juli 2012 (2012-07-31), XP055637321, Gefunden im Internet: URL:http://www.clearingstelle-bw.de/downlo ad/langmatz-17-01_Produktinformation.pdf [gefunden am 2019-10-30]
- Hörnemann: "Produkte für die perfekte Entwässerung SR-GMV -50 kN", , 12. April 2011 (2011-04-12), XP055637382, Gefunden im Internet: URL:https://hoernemann.de/schachtabdeckung en-typ-wasserdicht.html?file=files/hoernem ann/data/downloads/H7_Einzelseiten_pdfs_Fl eyer/Flyer_SR-GMV.pdf [gefunden am 2019-10-30]

## Beschreibung

Die Erfindung betrifft einen Unterflur-Schacht, der insbesondere für die Energieverteilung und/oder die Telekommunikation vorgesehen ist, in dem aber grundsätzlich auch andere Einrichtungen angeordnet oder untergebracht sein können.

Die Wände des meist rechteckigen Schachtes bestehen vorzugsweise aus Kunststoff, wobei sie aber auch aus einem anderen Material wie Beton hergestellt sein können. In dem oberen Endabschnitt des Schachtes, in dem ein aus Metall bestehender Schachtrahmen angeordnet sein kann, sitzt ein Schachtdeckel, dessen Oberseite im Wesentlichen bündig mit der Umgebung des Schachtes verläuft. Dieser Schachtdeckel besteht vorzugsweise aus Beton oder Gusseisen und hat meist einen Drehriegel, der durch Drehen eines damit verbundenen Betätigungselementes einen Vorsprung der Schachtwände des Schachtrahmens untergreifen kann. Das Betätigungselement kann beispielsweise ein drehbarer Zapfen sein, der nach Einsetzen eines entsprechend geformten Werkzeugs gedreht werden kann. Hierbei handelt es sich meist um ein Sechskantwerkzeug oder ein ähnliches Werkzeug, mit dem das Betätigungselement drehbar ist. Ein solches Werkzeug kann einer unbefugten Person, die Zugang zu dem Schacht erhalten möchte, ohne Weiteres zur Verfügung stehen, weshalb der Zugang zu dem Betätigungselement meist durch ein einsetzbares Schloss versperrt wird, das vor Drehen des Betätigungselementes entfernt werden muss. In der Praxis ist jedoch nicht auszuschließen, dass ein Monteur nach Arbeiten in dem Schacht vergisst, den Deckel zu verriegeln, bevor er das Sicherheitsschloss anbringt.

Ein weiterer Unsicherheitsfaktor bezüglich des Zugangs einer unbefugten Person liegt darin, dass dann, wenn sich der Schacht im Bereich einer Fahrbahn befindet, die Verriegelungseinrichtung in Folge der schlagartigen Belastung des Schachtdeckels und der damit einhergehenden Vibrationen selbsttätig in die Freigabestellung wandern kann, so dass auch in diesem Fall der Schacht durch den Schachtdeckel nicht gegen unbefugte Personen geschützt ist.

Das Dokument Langmatz: Lösungen für Glasfasernetze-FTTH offenbart bereits einen Unterflur-Schacht der betrachteten Art, bei dem im Abstand unter dem Schachtdeckel ein Unterdeckel angeordnet ist, der auf Auflagerprofilen aufliegt, die an der Schachtwand befestigt sind, und bei dem der Unterdeckel gegen unbefugtes Öffnen gesichert ist. Das System ist so abgedichtet, dass keine Flüssigkeiten eindringen können, ohne dass hierzu nähere Einzelheiten angegeben sind DE 10 2006 045873 A1 (LANGMATZ LIC GMBH [DE]) offenbart eine Abdeckung für einen Schacht, mit einem Auflagerrahmen und wenigstens einem von diesem gehaltenen Schachtdeckel.

Der vorliegenden Erfindung liegt die Aufgabe zugrunde, einen Unterflur-Schacht anzugeben, bei dem das Problem eines Eintritts von Wasser gelöst ist.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass im Abstand unter dem Schachtdeckel ein Unterdeckel angeordnet ist, der auf Auflagerprofilen aufliegt, die an den Schachtwänden eines Schachtes befestigt sind, wobei der Unterdeckel gegen unbefugtes Öffnen gesichert ist.

Damit durch den oberen Schachtdeckel durchtretendes Wasser nicht ins Innere des Schachtes ablaufen kann, ist außerdem vorgesehen, dass der Unterdeckel auf einem umlaufenden Dichtrahmen aufliegt, der an den Schachtwänden angeschraubt ist und auf dem ein umlaufendes Dichtungsprofil befestigt ist, auf dem das Deckelblech aufliegt. Der Dichtungsrahmen kann dabei Ausschnitte haben, damit die Auflagerprofile an den Schachtwänden anschraubbar sind.

Der Dichtrahmen hat erfindungsgemäß außerhalb des umlaufenden Dichtungsprofils an den Eckbereichen Drainagelöcher, an denen nach unten in den Schacht verlaufende Drainageschläuche befestigt sein können, wodurch das oben in den Schacht eingetretende Wasser nahe den Schachtwänden zum Boden des Schachtes geleitet werden kann, wo üblicherweise Drainagerohre aus dem Schacht heraus führen.

Bevorzugt sind die Auflagerprofile an Ecken der Schachtwände befestigt, wobei der Unterdeckel an einem Randabschnitt in zwei Auflagerprofile einhängbar und an seinem gegenüberliegenden Randabschnitt in zwei Auflagerprofilen verriegelbar oder mit diesen verschraubbar ist. Der Unterdeckel weist dabei in einer bevorzugten Ausführungsform ein ebenes Deckelblech auf, unter dem ein zu den Eckbereichen verlaufendes Verstärkungskreuz befestigt ist, das vorzugsweise aus Hohlprofilen besteht.

Der Unterdeckel hat damit einen einfachen Aufbau und ein verhältnismäßig geringes Gewicht, so dass der Unterdeckel von einer Bedienungsperson leicht zu handhaben, d. h. aus dem Schacht herauszunehmen und wieder einzusetzen ist.

In weiteren Einzelheiten ist vorgesehen, dass die Auflagerprofile eine vordere Stirnwand, eine etwa um 90 °abgebogene obere Wand und eine wiederum um etwa 90 ° abgebogene Rückwand haben können, dass aus der vorderen Stirnwand und der oberen Wand eine zusammenhängende mittige Wandöffnung ausgeschnitten sein kann und dass zu beiden Seiten der mittigen Wandöffnung in der vorderen Stirnwand auf gleicher Höhe Schlitze ausgebildet sind. Die Auflagerprofile haben in der Aufsicht bevorzugt eine Trapezform mit einander gegenüberliegenden Rändern, die im Winkel von 90° zueinander verlaufen, wobei an den Rändern abgebogene Laschen vorstehen, die an den Schachtwänden an Eckbereichen angeschraubt werden.

Die vorstehende Ausbildung ist bei allen vier Auflagerprofilen eines bevorzugt ausgebildeten Unterflur-Schachtes identisch.

Bei zwei Auflagerprofilen ist außerdem an der Rückwand ein mittig in die Wandöffnung ragender Bolzen befestigt, der beim Einsetzen des Unterdeckels in den Schacht in die beiden zugehörigen Endabschnitte des Verstärkungskreuzes eingreift. Hierzu wird der Unterdeckel zunächst in schräger Lage derart in den Schacht eingesetzt, dass die Endabschnitte des Verstärkungskreuzes über die beiden Bolzen geschoben werden, woraufhin der Unterdeckel in die horizontale Lage verschwenkt wird, in der das ebene Deckelblech auf den vier Auflagerprofilen aufliegt.

Um den Unterdeckel in der Einbaulage verriegeln zu können, wird mit Vorteil vorgeschlagen, dass unter dem Deckelblech zwei Verriegelungsstangen angeordnet sind, die an einem Ende mit einem Drehmechanismus verbunden sind und im Winkel zueinander zu den Eckbereichen verlaufen, und zwar in einer solchen Position und Lage, dass sie in einen der beiden Schlitze des Auflagerprofils eintreten können. Der Drehmechanismus ist über einen Zapfen mit einem Schwenkhebel verbunden, der an der Oberseite des Deckelblechs angeordnet ist, und der Drehmechanismus ist so ausgebildet, dass durch Betätigung des Schwenkhebels in einer Richtung die Verriegelungsstangen in die zugehörigen Schlitze der Auflagerprofile vorgeschoben werden, und bei Drehung des Schwenkhebels in entgegengesetzter Richtung aus den Schlitzen zurückgezogen werden, so dass der Unterdeckel wieder freigegeben ist.

Zur Entnahme des Unterdeckels aus dem Schacht sind an der Oberseite des Deckelblechs Handgriffe befestigt, mit denen der Unterdeckel zunächst an der freigegebenen Verriegelungsseite angehoben und dann auf der anderen Seite von den beiden Bolzen abgezogen werden kann.

Der Schwenkhebel ist in der Verriegelungsstellung durch ein Schloss gesichert, das von einem Unbefugten nicht geöffnet werden kann.

Damit Unbefugte den Unterdeckel nicht gewaltsam entfernen können, sind die Handgriffe in klammerartigen Halterungen so befestigt, dass die Handgriffe bei Überschreiten einer vorbestimmten Zugkraft aus ihrer Halterung herausgerissen werden.

Die Erfindung sieht somit einen einfach aufgebauten und bequem zu handhabenden Unterdeckel vor, der die Sicherheit des Schachtes gegen unbefugten Zugang zum Schachtinneren erheblich verbessert und die Schachteinbauten wirkungsvoll vor Diebstahl und/oder Beschädigung schützt.

Das vorzugsweise ebene Deckelblech erstreckt sich - abgesehen von einem umlaufenden kleinen Spalt - über die gesamte Fläche des Schachtes.

Das Deckelblech, das Verstärkungskreuz, die Auflager, der Dichtrahmen und die Verriegelungsstangen bestehen zweckmäßigerweise aus Edelstahl.

Weitere Einzelheiten der Erfindung ergeben sich aus der nachfolgenden Beschreibung einer bevorzugten Ausführungsform sowie anhand er Zeichnungen. Dabei zeigen:
- Figur 1: eine Aufsicht auf einen Unterdeckel;
- Figur 2: den Unterdeckel von Figur 1, von unten gesehen;
- Figur 3: eine perspektivische Aufsicht auf einen Schacht mit eingesetztem Unterdeckel;
- Figur 4: den Schacht von Figur 3, von unten gesehen;
- Figur 5: ein Auflagerprofil zum Verriegeln des Unterdeckels;
- Figur 6: ein Auflagerprofil zum Verrasten des Unterdeckels;

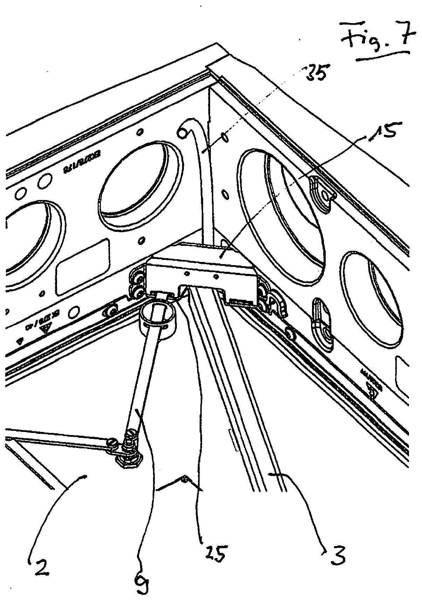

- Figur 7: einen Ausschnitt aus der Verriegelungsseite, von unten gesehen;

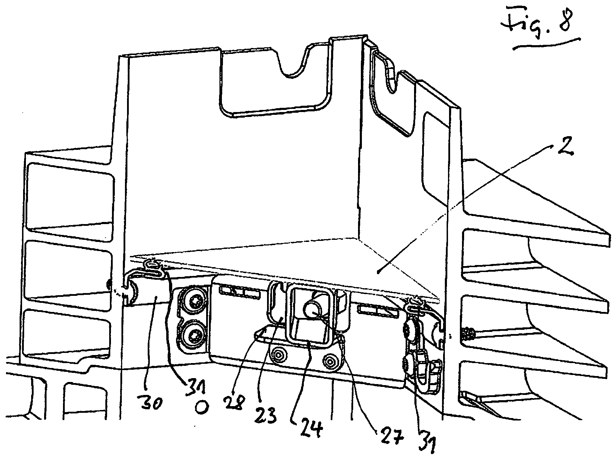

- Figur 8: einen Ausschnitt aus der Verrastungsseite, schräg von oben gesehen;
- Figur 9: einen Dichtrahmen;
- Figur 10: eine Detailansicht des Schließmechanismus;

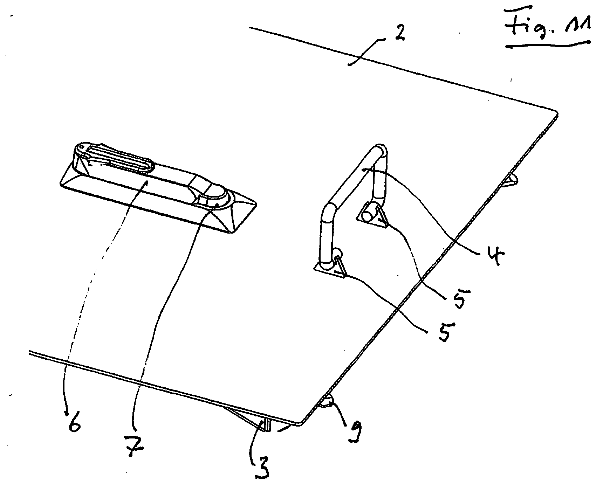

- Figur 11: die Detailansicht von Figur 10 in einer Aufsicht auf den Unterdeckel.

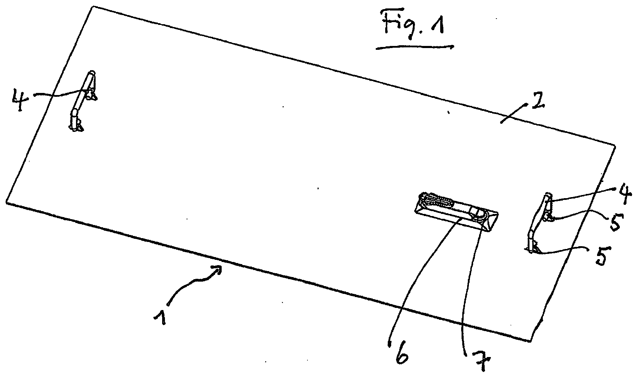

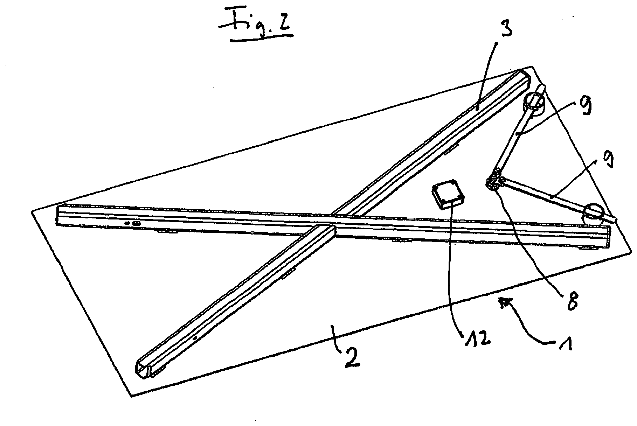

Die in den Figuren 1 und 2 dargestellte Ausführungsform eines Unterdeckels 1 enthält ein ebenes, rechteckiges Deckelblech aus Edelstahl, an dessen Unterseite ein aus Hohlprofilen zusammengesetztes Verstärkungskreuz 3 befestigt, vorzugsweise angeschweißt ist. Das Verstärkungskreuz 3 erstreckt sich bis nahe zu den Ecken des Deckelblechs 2.

Auf der Oberseite des Deckelblechs 2 sind zwei Handgriffe 4 angeordnet, die in klauenartigen Auflagern 5 gehalten sind. Die Anordnung ist so getroffen, dass die Handgriffe 4 aus den klauenartigen Auflagern 5 herausgerissen werden, wenn eine vorbestimmte Zugkraft überschritten wird.

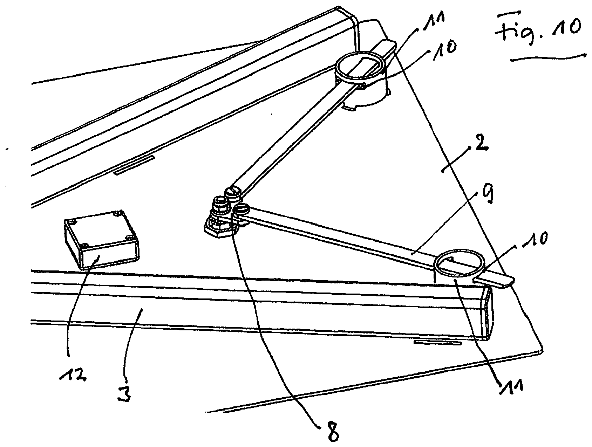

Auf dem Deckelblech 2 ist außerdem ein Schwenkhebel 6 angeordnet, der in der dargestellten Lage in einem Schloss 7 verriegelbar ist. Wenn das Schloss 7 geöffnet ist, kann der Schwenkhebel 6 hochgeklappt und mit einem Zapfen gedreht werden, der drehfest mit einem an der Unterseite des Deckelblechs 2 angeordneten Drehmechanismus 8 verbunden ist. An dem scheibenförmigen Drehmechanismus 8 sind die Enden von zwei im Abstand voneinander angelenkten Verriegelungsstangen 9 befestigt, die durch Schlitze 10 in ringförmigen Führungen 11 zum Randbereich des Deckelblechs 2 verlaufen. Durch Drehen des Schwenkhebels 6 können die beiden Verriegelungsstangen 9 vorgeschoben werden, um das Deckelblech 2 zu verriegeln, oder zu dessen Freigabe zurückgezogen werden. Dies ist insbesondere aus der vergrößerten Darstellung der Figur 10 zu ersehen.

An der Unterseite des Deckelblechs 2 ist auch ein Teil des Gehäuses 12 des Schlosses 7 für den Schwenkhebel 6 angebracht.

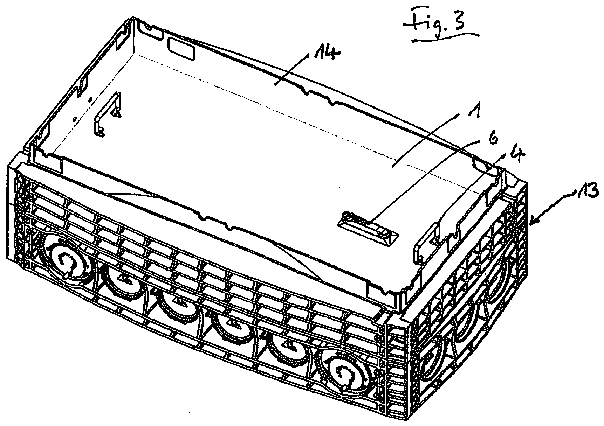

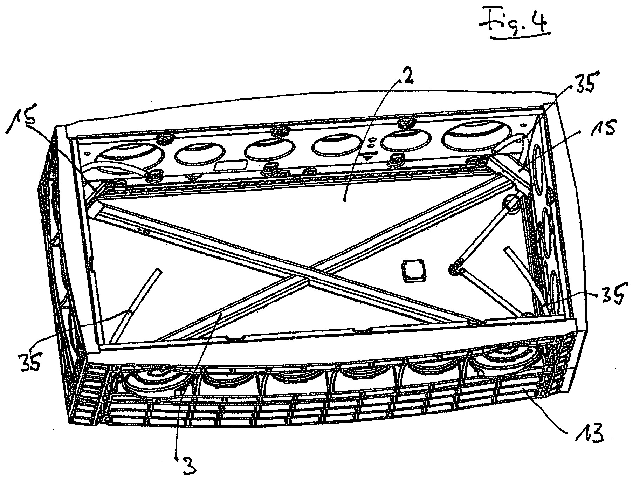

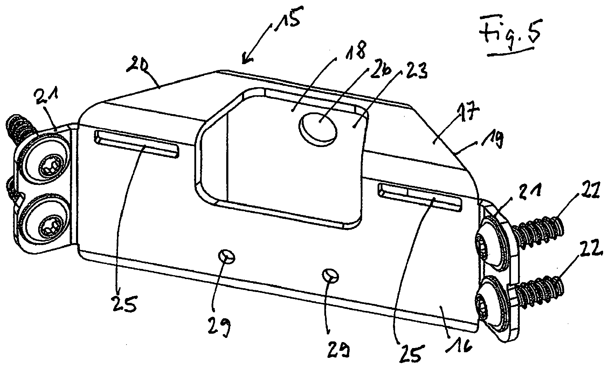

Die Figuren 3 und 4 zeigen die Einbaulage des Unterdeckels 1 in einen rechteckigen Kunststoffschacht 13, in dessen oberen Endabschnitt ein aus Metall bestehender Schachtrahmen 14 eingesetzt ist. Der Unterdeckel 1 liegt auf Auflagerprofilen 15 auf, die mit Kunststoff-Schrauben 22 (Figur 5) an den Schachtwänden angeschraubt sind, und zwar in einer solchen tiefen Position in dem Schacht, dass im Abstand darüber ein massiver Schachtdeckel aus Beton oder Gusseisen in dem Schacht angeordnet werden kann, der in etwa bündig mit der Umgebung des Schachtes 13 verläuft.

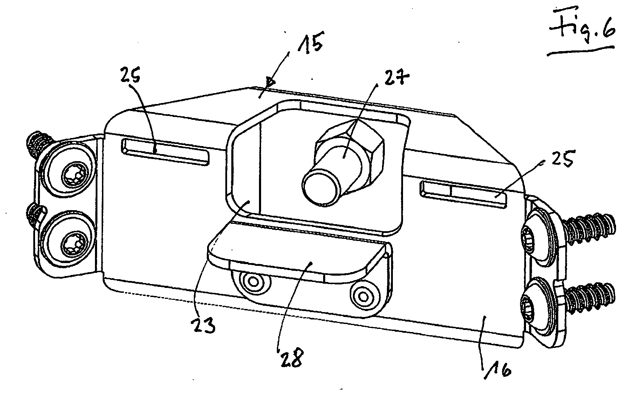

Die Figuren 5 und 6 zeigen Einzelheiten der Auflagerprofile 15. Die Auflagerprofile 15 sind aus einem Stahlblech geformt und haben eine vordere, in Einbaulage vertikale Stirnwand 16, eine um 90 ° abgebogene obere Wand 17 und eine wiederum um 90 ° abgebogene Rückwand 18. In der Aufsicht haben die Auflagerprofile 15 eine Trapezform mit gegenüberliegenden Rändern 19, 20, die in einem Winkel von 90 ° aufeinander zulaufen. Von der vorderen Stirnwand (16) stehen in der Verlängerung der seitlichen Ränder 19, 20 zwei Laschen 21 vor, die Schraubenlöcher haben, so dass das Auflagerprofil 15 in einem Eckbereich mit Schrauben 22 an den Schachtwänden angeschraubt werden kann.

Aus der vorderen Stirnwand 16 und der oberen Wand 17 ist mittig eine Wandöffnung 23 ausgeschnitten, die so groß ist, dass ein Endabschnitt eines das Verstärkungskreuz 3 bildenden Hohlprofils 24 in die Wandöffnung 23 eingesetzt werden kann, was weiter unten näher erläutert wird.

Außerdem sind aus der vorderen Stirnwand 16 zwei Schlitze 25, auf gleicher Höhe liegend, ausgeschnitten, in die die beiden Verriegelungsstangen 9 eintreten können, um den Unterdeckel 1 in dem Schacht zu verriegeln.

In der Rückwand 17 ist ein Loch 26 ausgebildet, in dem ein Bolzen 27 verschraubt werden kann, der in Richtung der vorderen Stirnwand 16 ragt, wie Figur 6 zeigt. Unter der Wandöffnung 23 ist ein Führungswinkel 28 angeschraubt, wozu in der vorderen Stirnwand 16 zwei Bohrungen 29 vorgesehen sind.

Zur Aufnahme des Unterdeckels 1 in den Schacht sind an dessen Schmalseiten auf einer Seite zwei Auflagerprofile 15 gemäß Figur 6 und an der gegenüberliegenden Seite zwei Auflagerprofile 15 gemäß Figur 5 auf gleicher Höhe angeschraubt. Der Unterbodendeckel 1 wird zunächst in schräger Lage so in den Schacht eingesetzt, dass zwei Hohlprofile 24 des Verstärkungskreuzes 3 über die zugehörigen Bolzen 27 in der mittigen Wandöffnung 23 geschoben werden, was durch den Führungswinkel 28 unter der mittigen Wandöffnung 23 erheblich erleichtert ist. Anschließend wird der Unterdeckel 1 mit seinem Deckelblech 2 auf die vier Auflagerprofile 15 gelegt, woraufhin durch Drehen des Schwenkhebels 6 die Verriegelungsstangen 9 in zugehörige Schlitze 25 vorgeschoben werden. Wenn in dieser Lage der Schwenkhebel 6 durch das Schloss 7 fixiert wird, kann der Unterdeckel 1 nicht - auch nicht gewaltsam - aus dem Schacht heraus genommen werden.

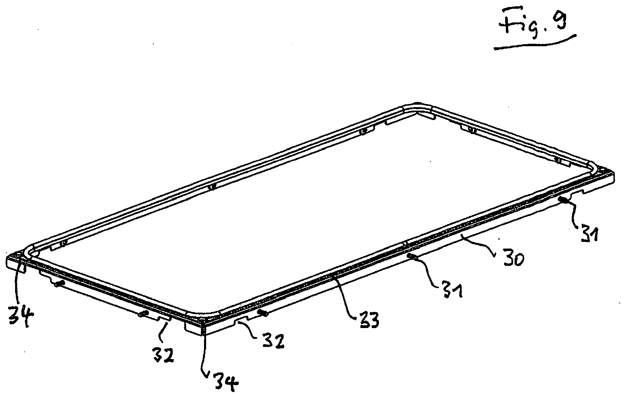

Figur 9 zeigt einen umlaufenden Dichtrahmen 30, der mit Schrauben 31 an den Schachtwänden anschraubbar ist. Der Dichtrahmen 30 hat in den Eckbereichen Ausschnitte 32, damit die im Inneren des Dichtrahmens 30 an den Eckbereichen angeordneten Auflagerprofile 15 mit ihren Laschen 21 ebenfalls an den Schachtwänden angeschraubt werden können. Auf dem Dichtrahmen 30 ist ein umlaufendes Dichtungsprofil 33 gehalten, auf dem das Deckelblech 2 ebenso wie auf den Oberseiten der Auflagerprofile 15 aufliegt.

An den Ecken des Dichtrahmens 30 sind Drainagelöcher 34 ausgebildet, in denen Drainageschläuche 35 befestigt sind, die eventuell auf dem Deckelblech 2 stehendes Wasser nahe den seitlichen Schachtwänden in Richtung des Bodens des Schachtes abführen können.

Es wird betont, dass die Erfindung nicht auf die beschriebenen und dargestellten Ausführungsformen beschränkt ist, Vielmehr sind alle offenbarten Merkmale auf jede sinnvolle Weise einzeln miteinander kombinierbar.

## Patentansprüche

1. Unterflur-Schacht insbesondere für die Energieverteilung und/oder die Telekommunikation, in dessen oberem Endabschnitt ein Schachtdeckel sitzt, dessen Oberseite im wesentlichen bündig mit der Umgebung des Schachtes verläuft, wobei im Abstand unter dem Schachtdeckel ein Unterdeckel (1) angeordnet ist, der auf Auflagerprofilen (15) aufliegt, die an der Schachtwand befestigt sind, und wobei der Unterdeckel gegen unbefugtes Öffnen gesichert ist,
**dadurch gekennzeichnet,**
**dass** der Unterdeckel (1) auf einem umlaufenden Dichtrahmen (30) aufliegt, der an der Schachwand angeschraubt ist und auf dem ein umlaufendes Dichtungsprofil (33) befestigt ist, und
**dass** der Dichtrahmen (30) außerhalb des umlaufenden Dichtungsprofils (35) an den Eckbereichen Drainagelöcher (34) hat, an denen ins Innere des Schachtes verlaufende Drainageschläuche (35) befestigbar sind.

2. Unterflur-Schacht nach Anspruch 1,
**dadurch gekennzeichnet,**
**dass** die Auflagerprofile (15) an Ecken der Schachtwand befestigt sind, wobei der Unterdeckel (1) an einem Randabschnitt in Auflagerprofile (15) einhängbar und an seinem gegenüberliegenden Randabschnitt in Auflagerprofilen befestigt ist.

3. Unterflur-Schacht nach Anspruch 1 oder 2,
**dadurch gekennzeichnet,**
**dass** der Unterdeckel (1) an den Auflagerprofilen (15) verriegelt oder verschraubt ist.

4. Unterflur-Schacht nach einem der Ansprüche 1 bis 3,
**dadurch gekennzeichnet,**
**dass** der Unterdeckel (1) ein ebenes Deckelblech (2) aufweist, unter dem ein zu den Eckbereichen verlaufendes Verstärkungskreuz (3) befestigt ist, das aus Hohlprofilen (24) besteht.

5. Unterflur-Schacht nach einem der Ansprüche 1 bis 4,
**dadurch gekennzeichnet,**
**dass** die Auflagerprofile (15) aus Stahlblech bestehen und in der Aufsicht eine Trapezform haben mit einander gegenüber liegenden Rändern (19, 20), die im Winkel von 90 ° zueinander verlaufen, und dass an den Rändern (19, 20) Laschen vorstehen, die an den Schachtwänden an deren Eckbereichen angeschraubt sind.

6. Unterflur-Schacht nach Anspruch 5,
**dadurch gekennzeichnet,**
**dass** die Auflagerprofile (15) eine vordere Stirnwand (16), eine um 90 ° abgebogene obere Wand (17) und eine um 90 ° abgebogene Rückwand (18) haben, dass aus der vorderen Stirnwand (16) und der oberen Wand (17) eine mittige Wandöffnung (23) ausgeschnitten ist und dass zu beiden Seiten der mittigen Wandöffnung in der vorderen Stirnwand (16) auf gleicher Höhe Schlitze (25) ausgebildet sind.

7. Unterflur-Schacht nach Anspruch 5 oder 6,
**dadurch gekennzeichnet,**
**dass** an der Rückwand (18) ein mittig in die Wandöffnung (23) ragender Bolzen (29) befestbar ist, der in einen zugehörigen Endabschnitt des Verstärkungskreuzes (3) eingreifen kann.

8. Unterflur-Schacht nach einem der Ansprüche 1 bis 7;
**dadurch gekennzeichnet,**
**dass** unter dem Deckelblech (2) zwei Verriegelungsstangen (9) angeordnet sind, die an einem Ende mit einem Drehmechanismus (8) verbunden sind und im Winkel zueinander zu Eckbereichen verlaufen, wobei der Drehmechanismus (8) mit einem Schwenkhebel (6) verbunden ist, der an der Oberseite des Deckelblechs (2) angeordnet ist, wobei durch Betätigung des Schwenkhebels (6) die Verriegelungsstangen (19) in zugehörige Schlitze (25) der Auflagerprofile (15) verschiebbar und aus diesen zurückziehbar sind.

9. Unterflur-Schacht nach einem der Ansprüche 1 bis 8,
**dadurch gekennzeichnet,**
**dass** an der Oberseite des Deckelblechs (2) Handgriffe (4) befestigt sind, die bei Überschreiten einer vorbestimmten Zugkraft aus ihrer Halterung (5) freigegeben werden.

10. Unterflur-Schacht nach einem der Ansprüche 1 bis 9,
**dadurch gekennzeichnet,**
**dass** das Deckelblech (2), das Verstärkungskreuz (3), die Auflager (15), der Dichtrahmen (30) und die Verriegelungsstangen (9) aus Edelstahl bestehen.

## Claims

1. An underfloor shaft, particularly for energy distribution and/or telecommunications, situated in whose upper end section there is a shaft cover, the upper side of which extends substantially flush with the surroundings of the shaft, whereby arranged spaced below the shaft cover there is a lower cover (1), which rests on support profiles (15), which are fastened to the shaft wall, and wherein the lower cover is secured against unauthorised opening, **characterised in that** the lower cover (1) rests on a peripheral sealing frame (30), which is screwed to the shaft wall and fastened to which there is a peripheral sealing profile (33), and that the sealing frame (30) has drainage holes (34) outside the peripheral sealing profile (35) at the corner regions, to which drainage hoses (35) extending into the interior of the shaft may be connected.

2. An underfloor shaft as claimed in Claim 1, **characterised in that** the support profiles (15) are fastened at corners of the shaft wall, wherein the lower cover (1) is mountable in support profiles (15) at one edge section and is fastened in support profiles at its opposite edge section.

3. An underfloor shaft as claimed in Claim 1 or 2, **characterised in that** the lower cover (1) is locked or screwed to the support profiles (15).

4. An underfloor shaft as claimed in one Claims 1 to 3, **characterised in that** the lower cover (1) includes a flat cover plate (2), fastened below which there is a cruciform reinforcement (3) extending to the corner regions, which consists of hollow profiles (24).

5. An underfloor shaft as claimed in one of Claims 1 to 4, **characterised in that** the support profiles (15) consist of steel plate and have a trapezoidal shape in plan view with oppositely situated edges (19, 20), which extend at an angle of 90° to one another and that projecting at the edges (19, 20) there are lugs which are screwed to the shaft walls at their corner regions.

6. An underfloor shaft as claimed in Claim 5, **characterised in that** the support profiles (15) have a front end wall (16), an upper wall (17) bent through 90° and a rear wall (18) bent through 90°, that a central wall opening (23) is cut out of the front end wall (16) and the upper wall (17) and that slits (25) are formed in the front end wall (16) at the same height on both sides of the central wall opening.

7. An underfloor shaft as claimed in Claim 5 or 6, **characterised in that** fastened to the rear wall (18) there is a peg (29), which projects centrally into the wall opening (23) and which can engage in an associated end section of the cruciform reinforcement (3).

8. An underfloor shaft as claimed in one of Claims 1 to 7, **characterised in that** arranged beneath the cover plate (2) there are two locking bars (9), which are connected at one end to a rotary mechanism (8) and extend at an angle to one another to corner regions, wherein the rotary mechanism (8) is connected to a pivotal lever (6), which is arranged on the upper side of the cover plate (2), wherein the locking bars (19) are slidable into associated slits (25) in the support profiles (15) and are retractable from them by actuation of the pivotal lever (6).

9. An underfloor shaft as claimed in one of Claims 1 to 8, **characterised in that** fastened to the upper side of the cover plate (2) there are handles (4), which are released from their mounting (5) when a predetermined tensional force is exceeded.

10. An underfloor shaft as claimed in one of Claims 1 to 9, **characterised in that** the cover plate (2), the cruciform reinforcement (3), the supports (15), the sealing frame (30) and the locking bars (9) consist of stainless steel.

## Revendications

1. Cage souterraine, en particulier pour la distribution d'énergie et/ou la télécommunication, dans la section d'extrémité supérieure de laquelle siège un couvercle de cage, dont le côté supérieur s'étend sensiblement en affleurement avec l'environnement de la cage, dans laquelle est disposé, à distance, sous le couvercle de cage, un couvercle inférieur (1), qui repose sur des profilés de support (15) qui sont fixés sur la paroi de cage, et dans laquelle le couvercle inférieur est bloqué pour éviter toute ouverture non autorisée,
**caractérisée en ce**
**que** le couvercle inférieur (1) repose sur un châssis étanche (30) périphérique, qui est vissé sur la paroi de cage et sur lequel est fixé un profilé d'étanchéité (33) périphérique, et
**que** le châssis étanche (30) a, à l'extérieur du profilé d'étanchéité (35) périphérique, sur les zones d'angle, des trous de drainage (34), sur lesquels des tuyaux flexibles de drainage (35) s'étendant à l'intérieur de la cage peuvent être fixés.

2. Cage souterraine selon la revendication 1,
**caractérisée en ce**
**que** les profilés de support (15) sont fixés sur des angles de la paroi de cage, dans laquelle le couvercle inférieur (1) peut être accroché dans des profilés de support (15) sur une section de bord et est fixé dans des profilés de support sur sa section de bord opposée.

3. Cage souterraine selon la revendication 1 ou 2, **caractérisée en ce**
**que** le couvercle inférieur (1) est verrouillé ou vissé sur les profilés de support (15).

4. Cage souterraine selon l'une quelconque des revendications 1 à 3,
**caractérisée en ce**
**que** le couvercle inférieur (1) présente une tôle de couvercle (2) plane, sous laquelle est fixée une croix de renforcement (3) s'étendant vers les zones d'angle, laquelle est constituée de profilés creux (24).

5. Cage souterraine selon l'une quelconque des revendications 1 à 4,
**caractérisée en ce**
**que** les profilés de support (15) sont constitués de tôle d'acier et ont, vus d'en haut, une forme de trapèze avec des bords (19, 20) opposés les uns les autres, qui s'étendent les uns par rapport aux autres selon l'angle de 90°, et que font saillie sur les bords (19, 20) des brides, qui sont attachées par vissage sur les parois de cage sur leurs zones d'angle.

6. Cage souterraine selon la revendication 5,
**caractérisée en ce**
**que** les profilés de support (15) ont une paroi frontale avant (16), une paroi supérieure (17) pliée de 90° et une paroi arrière (18) pliée de 90°, qu'une ouverture de paroi centrale (23) est découpée de la paroi frontale avant (16) et de la paroi supérieure (17) et que des entailles (25) sont réalisées à une hauteur identique de part et d'autre de l'ouverture de paroi centrale dans la paroi frontale avant (16).

7. Cage souterraine selon la revendication 5 ou 6,
**caractérisée en ce**
**que** peut être fixé sur la paroi arrière (18) un boulon (29) dépassant au centre dans l'ouverture de paroi (23), qui peut venir en prise avec une section d'extrémité associée de la croix de renforcement (3).

8. Cage souterraine selon l'une quelconque des revendications 1 à 7,
**caractérisée en ce**
**que** sont disposées sous la tôle de couvercle (2) deux barres de verrouillage (9), qui sont reliées à un mécanisme de rotation (8) sur une extrémité et s'étendent de manière angulaire l'une par rapport à l'autre vers des zones d'angle, dans laquelle le mécanisme de rotation (8) est relié à un levier de pivotement (6) qui est disposé sur le côté supérieur de la tôle de couvercle (2), dans laquelle les barres de verrouillage (19) peuvent être coulissées dans des entailles (25) associées des profilés de support (15) et peuvent en être retirées hors de celles-ci par l'actionnement du levier de pivotement (6).

9. Cage souterraine selon l'une quelconque des revendications 1 à 8,
**caractérisée en ce**
**que** sont fixées sur le côté supérieur de la tôle de couvercle (2) des poignées (4), qui sont libérées hors de leur fixation (5) lors d'un dépassement d'une force de traction prédéfinie.

10. Cage souterraine selon l'une quelconque des revendications 1 à 9,
**caractérisée en ce**
**que** la tôle de couvercle (2), la croix de renforcement (3), les supports (15), le châssis étanche (30) et les barres de verrouillage (9) sont constitués d'acier inoxydable.
